# EUROPEAN PATENT APPLICATION

(11) **EP 1 255 229 A2**
(43) Date of publication of application: **06.11.2002**
(21) Application number: 02076449.4
(22) Date of filing: 15.04.2002
(51) Int. Cl.: G06T 15/70

(54) **Animation Method**

(30) Priority: 25.04.2001 US 842534
(71) Applicant: EASTMAN KODAK COMPANY, Rochester, New York 14650 (US)
(72) Inventor: Stephany, Thomas Michael, c/o Eastman Kodak Co., Rochester, New York 14650-2201 (US); Squilla, John R., c/o Eastman Kodak Co., Rochester, New York 14650-2201 (US); Olson, Donald Edward, c/o Eastman Kodak Co., Rochester, New York 14650-2201 (US)
(74) Representative: Nunney, Ronald Frederick Adolphe

(57) **Abstract**

A method of processing a digital image to animate a figure in the image. The method includes the steps of providing the digital still image; identifying the figure in the digital still image to be animated; generating an animation model of the figure; substituting the animation model for the figure in the digital still image; detecting an area of missing detail in the digital still image resulting from the substitution; identifying information in the digital still image adjacent the area of missing detail; replicating the identified information; and inserting the replicated identified information into the area of missing detail to generate an animated image.

## Description

The present invention relates to image processing, and more particularly to a method of image processing an animated figure.

The animation of figures, objects or characters has been the subject and attention of artists for many years. Ranging from Nickelodeon machines of the late 19^{th} century that flipped pages of paper creating the illusion of movement, to the sophisticated cartoons of the 20^{th} century, there has been tremendous interest in the process of animation.

Techniques have been developed for creating photorealistic 3D facial models and animations from photographs of a human subject. (Refer to Synthesizing Realistic Facial Expressions from Photographs" by Pighin et al, SIGGRAPH 98, Computer Graphics Proceedings, Annual Conference Series, 1998, pages 75-83.) An animation can encompass any change, for example, a movement of the head or a change in facial expression.

It may be desired to select a figure in a photograph, animate the figure, and create a new photograph of the animated figure. That is, it may be desirable to "cut" a figure from an image, animate the figure, and "insert" the animated figure back into the image. However, in inserting the animated figure into the image, details of the image may be missing. Such missing details can result, for example, if the animated figure has been moved or repositioned within the image. For example, if the image is of a person looking over his left shoulder, and the animated figure is of the person looking over his right shoulder, details of the image about the person's left shoulder may be missing when the animated figure is inserted back into the image.

U.S. 5,914,748 (Parulski, et al) discloses an imaging system useful for compositing images including a first image of a subject plus a background and a second image of the background only. The first and second images are subtracted to generate a difference image, and the difference image is processed to generate a mask image. The mask image is then applied to the first image to select an area in which the subject is located, whereby the selected subject area is used in the compositing of a new image. While this method may have achieved certain degrees of success in particular applications, particularly where a photographer can physically move or manipulate a subject, it is not suitable when the subject and background are physically combined, as in an existing or legacy photograph.

Accordingly, a need continues to exist for a method for processing an image wherein a figure is animated and overcomes the problems noted above.

An object of the present invention is to provide a method for processing an image wherein a figure is animated.

Another object of the invention is to provide such a method which detects areas of missing detail in the image and corrects for these areas.

Still another object of the invention is to provide such a method which enhances the animated image.

These objects are given only by way of illustrative example. Thus, other desirable objectives and advantages inherently achieved by the disclosed invention may occur or become apparent to those skilled in the art. The invention is defined by the appended claims.

According to one aspect of the invention, there is provided a method of image processing a digital still image. The method comprises the steps of providing the digital still image; identifying the figure in the digital still image to be animated; generating an animation model of the figure; substituting the animation model for the figure in the digital still image; detecting an area of missing detail in the digital still image resulting from the substitution; identifying information in the digital still image adjacent the area of missing detail; replicating the identified information; and inserting the replicated identified information into the area of missing detail to generate an animated image.

The present invention provides a method for processing an image wherein a figure is animated. The method detects areas of missing detail, and corrects for these areas.

The foregoing and other objects, features, and advantages of the invention will be apparent from the following more particular description of the preferred embodiments of the invention, as illustrated in the accompanying drawings.

FIG. 1 shows a first digital still image comprising a figure to be animated.

FIG. 2 shows a second image which comprises an animation of the first image of FIG. 1.

FIG. 3 is a flow diagram of a method in accordance with the present invention.

FIG. 4 shows the figure of the first image of FIG. 1 outlined in dashed lines.

FIG. 5 shows the figure of the first image of FIG. 1 extracted from the first image.

FIG. 6 shows an animation model of the first image of FIG. 1.

FIG. 7 shows the substitution of the animation model for the figure in the first image.

FIG. 8 shows a mask area outlining the difference area of the substitution of the animation model for the figure.

FIG. 9 shows, in exaggerated enlargement, a portion of FIG. 8 illustrating the pixel arrangement of the mask area.

FIG. 10 shows, in exaggerated enlargement, a portion of FIG. 9 illustrating the pixel arrangement of the mask area.

FIG. 11(a)-(c) shows a series of animations to be image processed using the method in accordance with the present invention.

FIG. 12. is a flow diagram of a method in accordance with the present invention for a series of animations.

The following is a detailed description of the preferred embodiments of the invention, reference being made to the drawings in which the same reference numerals identify the same elements of structure in each of the several figures.

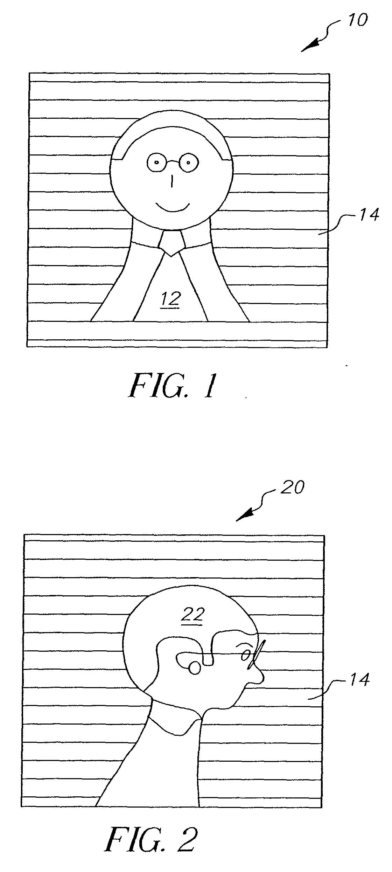

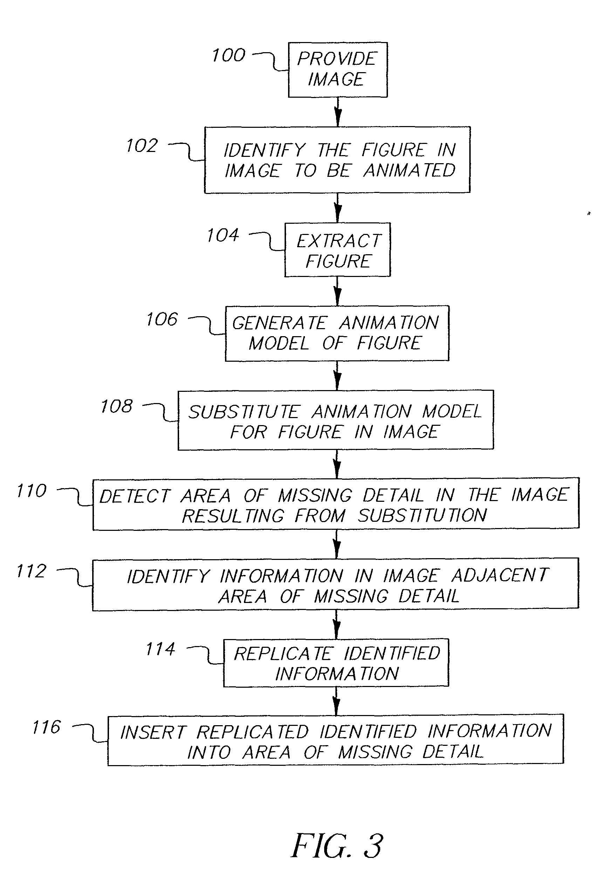

Figure 1 shows a first image 10 which is a digital still image captured by an image capture device such as a digital camera or camcorder and stored in digital form, such as on a floppy disk, memory card, or CD. Those skilled in the art will recognize that a photograph taken using an image capture device such as a photographic film camera, can be converted to a digital still image using a scanner or other device for converting images for storage in digital form.

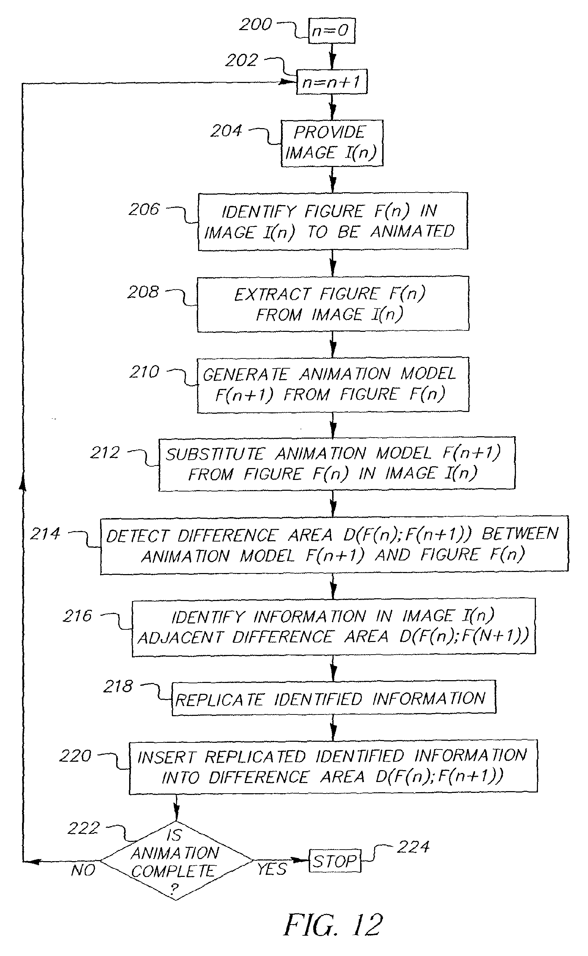

First image 10 comprises a first figure 12 and a background 14. First figure 12 is shown as a front view of a human subject, though first figure 12 may be an object or character. For ease of discussion, background 14 is shown as a plurality of lines, though background 14 may comprise any figure/object/character or combination thereof.

Figure 2 shows a second image 20 comprising a second figure 22 and background 14. Second figure 22 is an animation of first figure 12 which has been generated using known animation techniques. As illustrated, second figure 22 is a right side view of the human subject.

The method of the present invention is shown in a flow diagram illustrated in Figure 3. The method in accordance with the present invention processes first image 10 to generate second image 20.

First, an image is provided (step 100), and a figure disposed with the image is identified to be animated (step 102). Once identified, the figure is extracted from the image (step 104). Accordingly, the figure is isolated for extraction from the image. Once extracted, an animation model of the figure is generated (step 106). The animation model is substituted for the figure in the image (step 108) so that an area of missing detail can be detected (step 110). The information adjacent to the area of missing information is identified (step 112) and replicated (step 114), and then inserted (step 116) into the area of missing detail to generate an animated image.

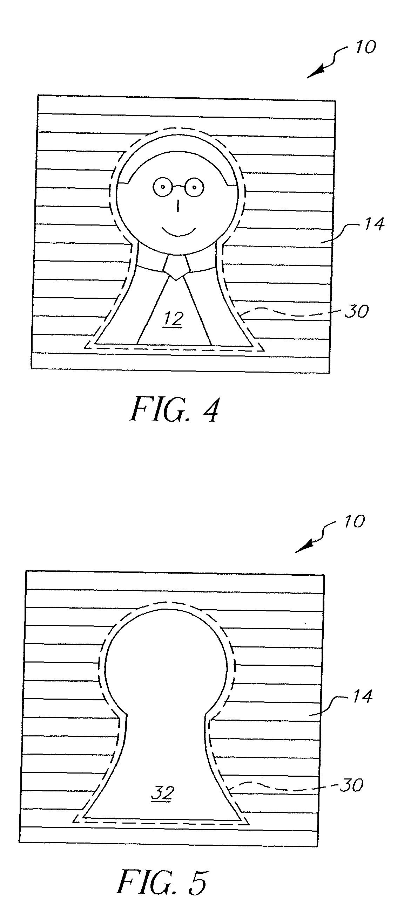

The method of the present invention is now more particularly described with regard to Figures 4-10 wherein the figure to be animated is selected as first figure 12 of first image 10; the animated model is second figure 22; and the resulting animated image is second figure 20.

As indicated above, first figure 12 of first image 10 is identified as the figure to be animated at step 102. As such, first figure 12 must be isolated so that it can be cut/extracted from first image 10. Figure 4 shows a dashed lines 30 around first figure 12, providing an outline of first figure 12 so as to indicate the figure to be extracted for animation.

The step of identifying the figure to be animated can be accomplished manually by an operator or automatically by a software program. The outline might be generated using a light pen, such as available from Inkwell Systems of Talent, Oregon. Other means are known to those skilled in the art are available for isolating and extracting a figure from an image. For example, ADOBE PHOTOSHOP ™ is a commercially available software package which may be suitable.

The area outlined by dashed lines 30 defines an extraction area 32 as shown in Figure 5. Accordingly, when first figure 12 is extracted from first image 10 at step 104, extraction area 32 is viewed in first image 10 as a blank space.

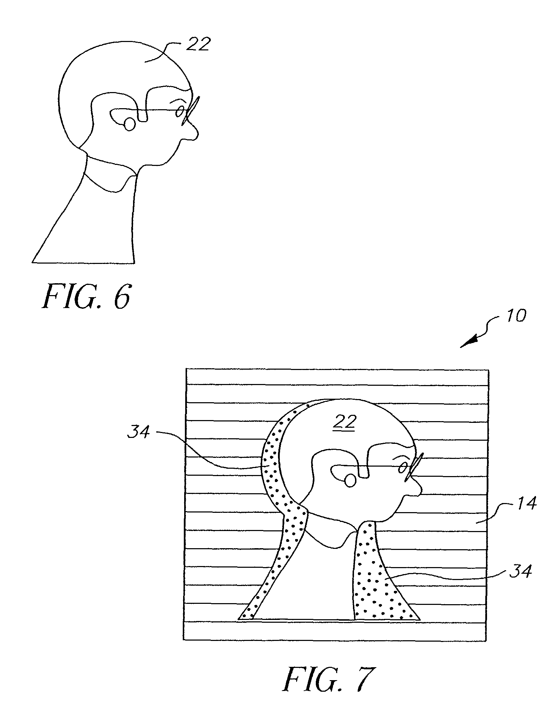

The animation model of first figure 12 may be generated at step 106 by means known to those skilled in the art. As indicated above, Pighin et al. have disclosed techniques for creating photorealistic 3D facial models and animations from photographs of a human subject. LifeFX Networks, Inc., at www.lifefx.com, indicate the development of technology to replicate and portray human facial movements and expressions. For the instant example, Figure 6 shows second figure 22 which is the animation model of first figure 12 generated using the known means.

At step 108, the animation model is substituted for the figure in the image. That is, second figure 22 is substituted for first figure 12 in first image 10. As such, second figure 22 is disposed in first image 10 and overlaid on extraction area 32. An area of missing detail results from the substitution of the animation model for the image. That is, since second figure 22 is of a different size and shape than extraction area 32, portions of extraction area 32 are not replaced/covered by second figure 22. This area of missing detail is detected at step 110. Figure 7 shows the area of missing detail as difference area 34 when second figure 12 is substituted for first figure 12 in first image 10. In Figure 7, difference area is shaded for clearer illustration. As illustrated, for the particular example, difference area 34 is comprised of two sections.

The detection of the area of missing detail can be accomplished by methods known to those skilled in the art For example, using ADOBE PHOTOSHOP ™.

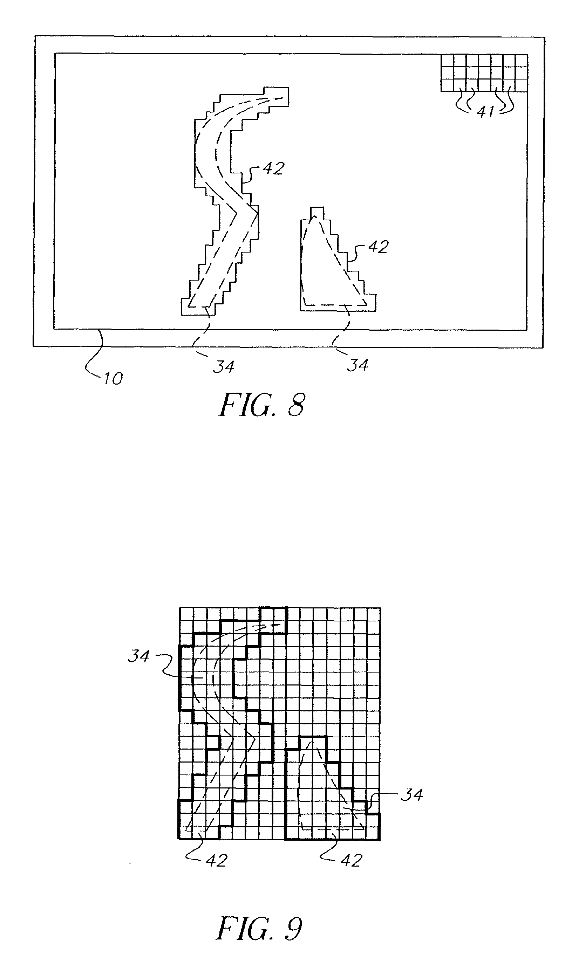

To complete the area of missing detail, image information is developed and inserted into difference area 34. A technique for developing and inserting information in the area of missing detail is shown in Figures 8-10.

Difference area 34 is comprised of a plurality of pixels 41. Any pixel which is partially or fully disposed within difference area 34 is assigned a value associated with a blue screen or other specialty colored background. Then, any pixel having a value corresponding to a blue screen value is detected as having blue screen information. Each pixel of the image is scanned to determine if the pixel comprises a portion of or all of blue screen information. A collection of the pixels having blue screen information defines a mask area 42 having a profile as shown in Figure 8. As such, mask area 42 results from identifying each pixel that comprises blue screen information, including each pixel which intersects dashed lines 30 representing difference area 34. For the particular example, mask area 42 comprises two sections.

Figure 9 illustrates an exaggerated enlargement of mask area 42 and difference area 34 to more particularly illustrate the pixel arrangement relative to the profile of mask area 42. Each pixel within mask area 42 is identified, and an adjacent neighboring pixel is identified (step 12). The adjacent neighboring pixel is replicated (step 114) and inserted into the area of missing detail (step 116). Preferably, the nearest neighbor pixel is used for replacement.

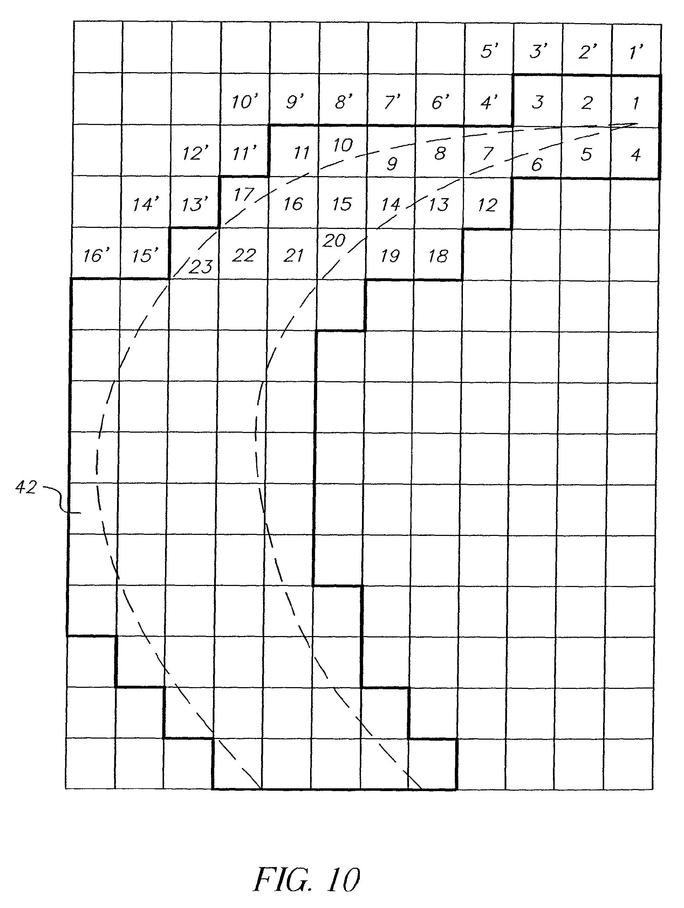

Referring now to Figure 10, Figure 10 illustrates an exaggerated enlargement of a portion of mask area 42 wherein the pixels are numbered for ease of discussion. Pixel 1 would be replaced with pixel 1'; pixel 2 would be replaced with pixel 2'; pixel 3 would be replaced with pixel 3'; etc. Depending on the arrangement of the pixel within mask area 42, several pixel-replacement options may be possible. For example, pixel 3 could be replaced by pixel 3', pixel 4', or pixel 5'. Similarly, pixel 6 could be replaced with pixel 4', or pixels 3 or 7 (once pixels 3 or 7 have themselves been replaced). Further, since a small portion of pixel 4 is disposed within difference area 34, pixel 4 might be replaced with pixel 1 rather than pixel 5, since the portion of pixel 4 within difference area 34 is adjacent the edge of pixel 1. Those skilled in the art will recognize that only the pixels disposed within or having a portion disposed within difference area 34 need to be replaced.

Blurring techniques might be employed to enhance the image. Such blurring techniques are known to those skilled in the art, such as the use of a blurring filter from ADOBE PHOTOSHOP ™. On a simple level, combinations of the pixels might be employed. For example, a combination of pixels 3', 4', and 5' might be used to replace pixel 3.

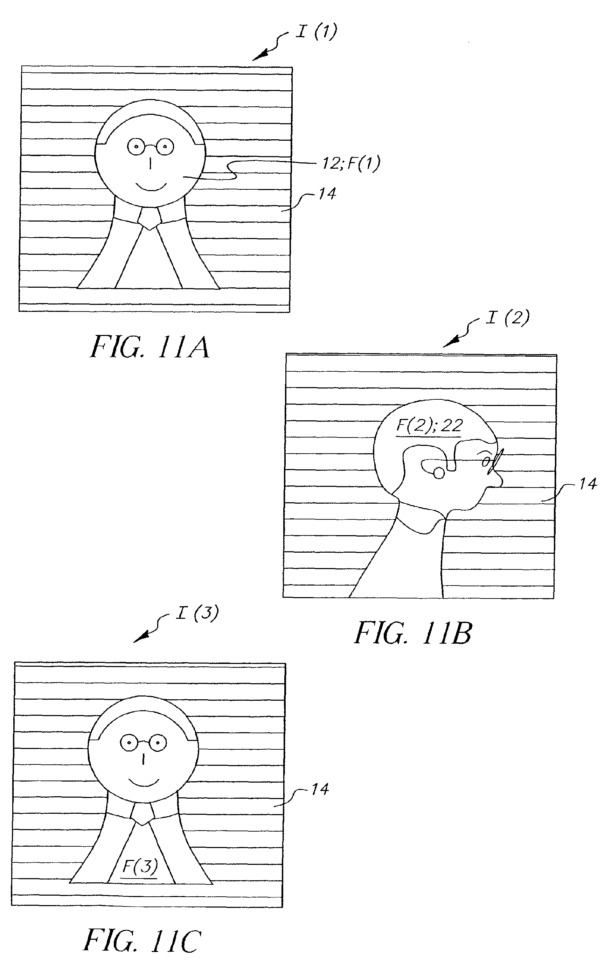

A method illustrated in Figures 11(a)-(c) and 12 is employed if there is a series of animations. For example, assume that a series of three animated figures is desired, as shown in Figures 11(a)-11(c), wherein Figure 11(a) shows a digital still image of a front view figure which is desired to be animated to a side view figure (shown in Figure 11(b)) and then back to a front view figure (shown in Figure 11(c)).

A flow diagram of a method in accordance with the present invention is illustrated in Figure 12. A counter n is set to 0 (step 200) and incremented to 1 (step 202). An image I(1) is provided (step 204); image I(1) is the digital still image which is to be animated. This image is shown in Figure 11(a), and is the same as first image 10 illustrated in Figure 1. The figure to be extracted from image I(1) is identified (step 206). As with first image 10, the figure to be extracted from image I(1) is figure 12, which is now identified as F(1) in Figure 11(a). Figure F(1) is extracted from image I(1) (step 208) as described above. An animation model of figure F(1) is generated (step 212) and defined as figure F(2). Figure F(2) is substituted for Figure (1) in image I(1) (step 212), and the area of missing detail is detected (step 214). This area of missing detail is difference area 34, and for ease of discussion is defined as difference area D(F(1);F(2)). Step 216 involved identifying information in image I(1) adjacent difference area D(F(1);F(2)). This information is replicated (step 218), and inserted into difference area D(F(1);F(2)) (step 222) to generate image I(2) shown in Figure 11(b).

If there is no further animation to be generated, the animation is complete (step 224).

However, if another animated is to be generated, the steps of 202-220 are repeated. For the particular example, counter n is incremented to 2 (step 202). An image I(2) is provided (step 204); image I(2) is the image generated when counter n was 1, that is, Figure F(2). This image is shown in Figure 11(b), and is the same as second image 20 illustrated in Figure 2. The figure to be extracted from image I(2) is identified (step 206). As with second image 20, the figure to be extracted from image I(2) is figure 22, which is now identified as F(2) in Figure 11(b). Figure F(2) is extracted from image I(2) (step 208) as described above. An animation model of figure F(2) is generated (step 212) and defined as figure F(3). Figure F(3) is substituted for Figure (2) in image I(2) (step 212), and the area of missing detail is detected (step 214). This area of missing detail is difference area D(F(2);F(3)). Step 216 involved identifying information in image I(2) adjacent difference area D(F(2);F(3)). This information is replicated (step 218), and inserted into difference area D(F(2);F(3)) (step 222) to generate image I(3) shown in Figure 11(c).

## Claims

1. A method of image processing a digital still image, comprising the steps of:
a) providing the digital still image;
b) identifying the figure in the digital still image to be animated;
c) generating an animation model of the figure;
d) substituting the animation model for the figure in the digital still image;
e) detecting an area of missing detail in the digital still image resulting from the substitution;
f) identifying information in the digital still image adjacent the area of missing detail;
g) replicating the identified information; and
h) inserting the replicated identified information into the area of missing detail to generate an animated image.

2. The method of Claim 1, further comprising the step of blurring the replicated identified information.

3. A method of image processing a digital still image to generate a plurality of animated images, comprising the steps of:
a) providing the digital still image;
b) identifying the figure in the digital still image to be animated;
c) generating an animation model of the figure;
d) substituting the animation model for the figure in the digital still image;
e) detecting an area of missing detail in the digital still image resulting from the substitution;
f) identifying information in the digital still image adjacent the area of missing detail;
g) replicating the identified information;
h) inserting the replicated identified information into the area of missing detail to generate a first animated image; and
i) defining the first animated image to be the digital still image and generating a second animated image by repeating the steps of a) through h).

4. The method of Claim 3, further comprising the step of blurring the replicated identified information.

5. A method of image processing a digital still image to generate a plurality of animated images, comprising the steps of:
a) setting a counter n equal to 1;
b) providing a digital still image I(n);
c) identifying a figure F(n) in the image I(n) to be animated;
d) extracting the figure F(n) from the image I(n);
e) generating an animation model F(n+1) from the figure F(n);
f) substituting the animation model F(n+1) for the figure F(n) in the image I(n);
g) detecting a difference area D( F(n);F(n+1)) between the animation model F(n+1) and the figure F(n);
h) identifying information in the image I(n) adjacent the difference area D( F(n);F(n+1));
i) replicating the identified information;
j) inserting the replicated identified information into the difference area D( F(n);F(n+1)) to generate an animated image I(n+1); and
k) repeating steps c) through j) to generate a plurality of animated images.

6. The method of Claim 5, further comprising the step of blurring the replicated identified information.

7. A method of image processing a digital still image to generated an animated digital still image, comprising the steps of:
a) providing the digital still image;
b) identifying the figure in the digital still image to be animated;
c) generating an animation model of the figure;
d) substituting the animation model for the figure in the digital still image;
e) determining a difference area in the digital still image resulting from the substitution;
f) identifying information in the digital still image adjacent the difference area;
g) replicating the identified information; and
h) inserting the replicated identified information into the difference area to generate the animated digital still image.

8. An imaging system, comprising:
an image capture device providing a digital still image;
means for extracting a figure from the digital still image to generate a difference image comprised of a background section and an extraction section;
means for animating the figure to generate an animation model; means for substituting the animation model in the difference image;
means for detecting an area of missing detail in the difference image resulting from the substitution;
means for identifying information in the difference image adjacent the area of missing detail;
means for replicating the identified information; and
means for inserting the replicated identified information into the area of missing detail to generate an animated digital still image.

9. The imaging system of Claim 8, further comprising means for blurring the replicated identified information.
